# FASCICULE DE BREVET EUROPEEN

(11) **EP 3 571 693 B1**
(45) Date de publication et mention de la délivrance du brevet: **06.01.2021**
(21) Numéro de dépôt: 18702770.1
(22) Date de dépôt: 18.01.2018
(51) Int. Cl.: G10L 15/22

(54) **DISPOSITIF D'ASSISTANCE D'USAGER(S) D'UN VÉHICULE, À AGENTS CONVERSATIONNELS MULTIPLES**
BENUTZERUNTERSTÜTZUNGSVORRICHTUNG FÜR EIN FAHRZEUG MIT MEHREREN KONVERSATIONSAGENTEN
USER ASSISTANCE DEVICE FOR A VEHICLE, HAVING MULTIPLE CONVERSATIONAL AGENTS

(30) Priorité: 20.01.2017 FR 1750470
(43) Date de publication de la demande: 27.11.2019
(73) Titulaire: PSA Automobiles SA, 78300 Poissy (FR)
(72) Inventeur: TACCORI DUVERGEY, Celine, 92120 Montrouge (FR); BERTRAND, Emmanuel, 78100 St Germain en Laye (FR)
(86) Numéro de dépôt international: PCT/FR2018/050122
(87) Numéro de publication internationale: WO 2018/134527

(56) Documents cités:
- WO-A1-2015/094891
- GB-A- 2 537 903
- US-A1- 2013 275 164

## Description

L'invention concerne les dispositifs d'assistance qui sont destinés à assister des usagers (ou passagers) de véhicules, éventuellement de type automobile.

Certains véhicules, généralement de type automobile, comprennent un dispositif d'assistance (ou interface homme/machine) comportant des moyens de reconnaissance vocale et des moyens de contrôle faisant fonctionner un agent conversationnel pour converser avec un usager via des moyens de synthèse vocale. Cet agent conversationnel est un outil logiciel (ou programme) qui propose aux usagers de son véhicule la réalisation de tâche(s) par des équipements embarqués dans ce dernier. Ces propositions se font au moyen de messages sonores diffusés par les haut-parleurs du véhicule et/ou de messages textuels affichés sur un écran du véhicule.

Actuellement, et comme décrit dans le document brevet US 20080269958, l'unique agent conversationnel utilisé dans un véhicule est préconfiguré, et cette pré-configuration n'est généralement pas modifiable ou alors très peu. Dans cette dernière hypothèse c'est seulement le type de voix utilisée pour converser avec les usagers qui peut être choisi parmi plusieurs.

En fait la pré-configuration étant adaptée à un profil moyen d'usagers, l'impossibilité quasi-totale de la modifier peut rendre insatisfaits de nombreux usagers, et notamment une partie de ceux qui ne sont pas du tout habitués à converser avec un équipement électronique et une partie de ceux qui sont très habitués à converser avec un équipement électronique.

De plus, les pré-configurations existantes d'agents conversationnels concernent généralement un ensemble très limité de critères, ce qui limite l'intérêt que ces agents conversationnels peuvent procurer aux usagers.

Par ailleurs, même si des modifications de paramètre(s) sont possibles dans certains agents conversationnels existants, elles ne permettent pas vraiment de choisir la personnalité associée à cet agent.

Un exemple d'agent conversationnel embarqué dans un véhicule est proposé dans WO 2015/094891 A1.

L'invention a donc notamment pour but d'améliorer la situation.

Elle propose notamment à cet effet un dispositif d'assistance, d'une part, destiné à assister un usager d'un véhicule comprenant des équipements propres à réaliser des tâches, et, d'autre part, comprenant :
- des moyens de reconnaissance vocale propres à reconnaître des mots et expressions prononcés par au moins l'usager, et
- des moyens de contrôle propres, d'une part, à proposer à l'usager une liste d'agents conversationnels afin qu'il sélectionne l'un d'entre eux, chaque agent conversationnel étant propre à converser, via des moyens de synthèse vocale, avec l'usager, au moins pour proposer la réalisation de tâche(s), et/ou à déclencher automatiquement la réalisation de tâche(s), en fonction d'un ensemble prédéfini associé de critères préconfigurés définissant chacun au moins un mode ou droit d'intervention, et, d'autre part, à faire fonctionner l'agent conversationnel sélectionné par l'usager automatiquement ou lorsqu'au moins un mot ou une expression prononcé(e) par ce dernier a été reconnu(e) par les moyens de reconnaissance vocale.

Un mode d'intervention définit ici une ou plusieurs modalités permettant à un agent conversationnel d'intervenir auprès de, ou pour, l'usager. Un droit d'intervention définit ici comment l'agent conversationnel est autorisé à intervenir auprès de, ou pour, l'usager.

Ainsi, chaque usager d'un véhicule peut choisir l'agent conversationnel qui correspond le mieux à ses besoins, et lorsque sa voix est reconnue, ou lorsqu'il a été préalablement choisi pour le véhicule, c'est l'agent conversationnel qu'il a préalablement choisi qui est mis en fonctionnement pour converser avec lui et pour agir pour lui.

Le dispositif d'assistance selon l'invention peut comporter d'autres caractéristiques qui peuvent être prises séparément ou en combinaison, et notamment :
- ses moyens de contrôle peuvent être propres à proposer à l'usager une liste d'au moins deux agents conversationnels ayant des types qui sont choisis parmi (au moins) un type dit entraîneur (ou « coach »), un type dit bienfaiteur, un type dit majordome et un type dit ami ;
- les critères préconfigurés de chaque ensemble prédéfini peuvent être choisis parmi (au moins) un critère de contexte relatif au nombre d'usagers présents dans le véhicule, un critère de contexte relatif à l'environnement du véhicule, un critère d'apprentissage, un critère de niveau d'intelligence, un critère de mode d'initiation d'une conversation, un critère de type de message à fournir, un critère de temporalité d'un message à fournir, un critère de représentation d'un message à fournir, un critère d'évolution de relation, un critère de type d'incarnation, un critère de partage d'autorité, et un critère de registre de langue ;
- ses moyens de contrôle peuvent être propres à proposer à l'usager un mode dit expert dans lequel il est autorisé à modifier la pré-configuration de l'un au moins des critères préconfigurés de l'ensemble prédéfini qui est associé à l'agent conversationnel qu'il a sélectionné ;
   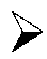 ses moyens de contrôle peuvent être propres, en cas de sélection par l'usager du mode expert, à déclencher un affichage sur un écran d'affichage des critères préconfigurés modifiables de l'ensemble prédéfini qui est associé à l'agent conversationnel qu'il a sélectionné ;
- ses moyens de contrôle peuvent être propres à adapter (ou affiner) le fonctionnement d'un agent conversationnel en fonction d'un comportement de l'usager qui a sélectionné ce dernier.

L'invention propose également un équipement électronique destiné à équiper un véhicule et comprenant un dispositif d'assistance du type de celui présenté ci-avant.

L'invention propose également un véhicule, éventuellement de type automobile, et comportant des équipements propres à réaliser des tâches et un dispositif d'assistance du type de celui présenté ci-avant ou un équipement électronique du type de celui présenté ci-avant.

L'invention propose également un équipement de communication mobile, d'une part, propre à communiquer par voie d'ondes avec des moyens de communication embarqués dans un véhicule comportant également des équipements propres à réaliser des tâches, et, d'autre part, comprenant un dispositif d'assistance du type de celui présenté ci-avant.

Par exemple, un tel équipement peut constituer un téléphone intelligent (ou « smartphone »).

D'autres caractéristiques et avantages de l'invention apparaîtront à l'examen de la description détaillée ci-après, et des dessins annexés, sur lesquels :

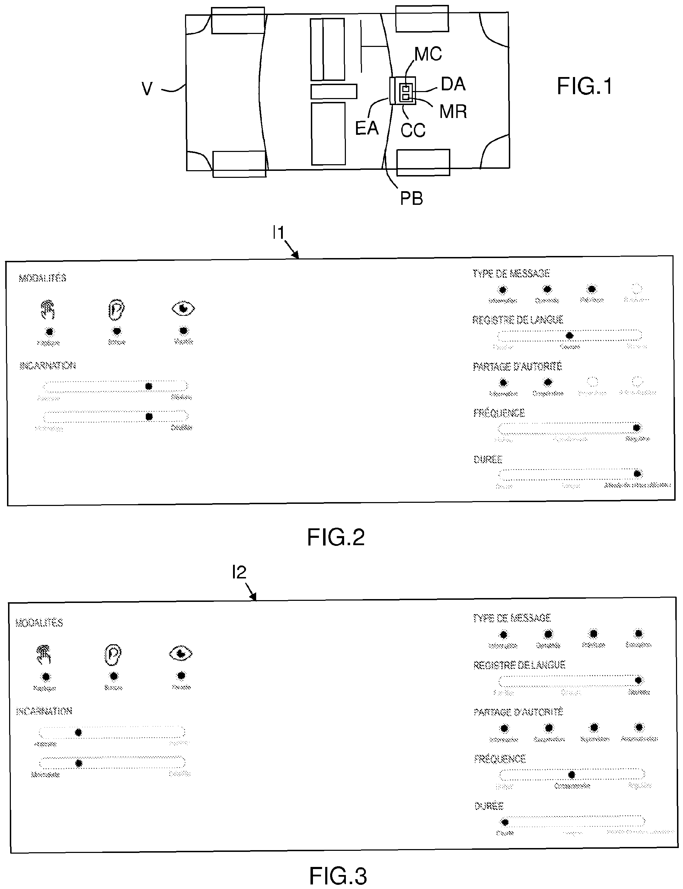

- la figure 1 illustre schématiquement et fonctionnellement un exemple de véhicule automobile comprenant un équipement électronique comportant un exemple de réalisation d'un dispositif d'assistance selon l'invention,
- la figure 2 illustre schématiquement un premier exemple d'image définie par un dispositif d'assistance selon l'invention, représentative des critères préconfigurés modifiables de l'ensemble prédéfini associé à un agent conversationnel de type entraîneur, et destinée à être affichée sur un écran d'affichage, et
- la figure 3 illustre schématiquement un second exemple d'image définie par un dispositif d'assistance selon l'invention, représentative des critères préconfigurés modifiables de l'ensemble prédéfini associé à un agent conversationnel de type bienfaiteur, et destinée à être affichée sur un écran d'affichage.

L'invention a notamment pour but de proposer un dispositif d'assistance DA destiné à assister un usager d'un véhicule V comprenant des équipements propres à réaliser des tâches (ou fonctions ou applications).

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comportant au moins un équipement assurant au moins une fonction ou tâche contrôlable au moins partiellement par au moins l'un de ses usagers, et notamment les véhicules terrestres, maritimes (ou fluviaux), et aériens.

On a schématiquement et fonctionnellement représenté sur la figure 1 un véhicule automobile V (ici une voiture) comprenant des équipements (non illustrés) propres à réaliser des tâches (ou fonctions ou applications), une planche de bord PB dans laquelle est installé, en position centrale, un combiné central CC muni d'un écran d'affichage EA, et un dispositif d'assistance DA.

Cet écran d'affichage EA est propre à afficher des informations qui sont représentatives d'une tâche sélectionnée. Il est éventuellement digital (ou tactile ou encore sensitif). On notera qu'il peut être également propre à afficher des informations qui sont représentatives de paramètres de fonctionnement du véhicule V, utiles au conducteur pour conduire ce dernier (V).

Les équipements (non illustrés) peuvent être de tout type et peuvent assurer chacun au moins une tâche (ou fonction ou application) de n'importe quel type. Ainsi, il pourra s'agir d'une installation de chauffage/climatisation, d'un dispositif d'aide à la navigation, d'un dispositif de communication sans fil (de préférence offrant un accès à l'Internet), d'un dispositif multimédia (pouvant diffuser des programmes radiophoniques et/ou télévisés reçus et/ou lire des vidéos et/ou des enregistrements sonores (tels que des chansons d'albums musicaux) et/ou permettre de jouer à un jeu vidéo et/ou de naviguer sur l'Internet), d'un dispositif d'aide(s) à la conduite (ou ADAS (« Advanced Driver Assistance System »)), d'un système d'éclairage extérieur ou intérieur, d'un avertisseur sonore, d'un indicateur de changement de direction, ou de l'ordinateur de bord, par exemple et non limitativement. Il est important de noter qu'un équipement n'est pas nécessairement installé de façon permanente dans le véhicule V. En effet, il peut être temporairement embarqué, comme par exemple un téléphone intelligent (ou « smartphone ») ou une tablette électronique ou encore une console de jeux vidéo. Par conséquent, un équipement peut être réalisé sous la forme de modules logiciels (ou informatiques ou encore « software »), ou de circuits ou composants électriques ou électroniques (ou « hardware »), ou encore d'une combinaison de circuits ou composants électriques ou électroniques et de modules logiciels.

Comme illustré sur la figure 1, un dispositif d'assistance DA, selon l'invention, comprend au moins des moyens de contrôle MC et des moyens de reconnaissance vocale MR.

Dans l'exemple illustré non limitativement sur la figure 1, le dispositif d'assistance DA fait partie du combiné central CC. Il est donc en permanence dans le véhicule V. Mais cela n'est pas obligatoire. En effet, il pourrait faire partie d'un autre équipement électronique que le combiné central CC, ou bien il pourrait lui-même constituer un équipement électronique, ou encore il pourrait faire partie d'un équipement de communication mobile appartenant à un usager du véhicule V et propre à communiquer par voie d'ondes avec des moyens de communication embarqués dans le véhicule V. Cet équipement de communication mobile peut, par exemple, être un téléphone intelligent (ou smartphone) ou une tablette électronique (communicante). Par conséquent, le dispositif d'assistance DA peut être réalisé sous la forme d'au moins une combinaison de circuits ou composants électriques ou électroniques (ou hardware), en particulier ses moyens de reconnaissance vocale MR, et de modules logiciels (ou software).

Les moyens de reconnaissance vocale MR sont propres à reconnaître des mots et expressions qui sont prononcés par au moins un usager du véhicule V. A cet effet, cet usager doit avoir préalablement prononcé plusieurs mots et/ou expressions spécifiques à proximité d'un microphone couplé aux moyens de reconnaissance vocale MR et ces derniers (MR) ont enregistrés ces mots et/ou expressions spécifiques prononcés en correspondance, par exemple, d'un identifiant d'usager.

Les moyens de contrôle MC sont propres à proposer à chaque usager (connu des moyens de reconnaissance vocale MR) une liste d'agents conversationnels afin qu'il sélectionne l'un d'entre eux. Chaque agent conversationnel est propre à converser, via des moyens de synthèse vocale, avec l'usager, au moins pour proposer la réalisation de tâche(s), et/ou à déclencher automatiquement la réalisation de tâche(s), en fonction d'un ensemble prédéfini associé de critères préconfigurés définissant chacun au moins un mode ou droit d'intervention. On comprendra que chaque agent conversationnel de la liste correspond à un type de profil d'usager.

La proposition de liste peut se faire consécutivement à la sélection par l'usager concerné d'une option dédiée de sélection d'agent conversationnel dans un menu affiché sur un écran du véhicule V ou de son équipement de communication mobile. Dans la première alternative l'écran peut être celui qui est référencé EA sur la figure 1 et qui fait éventuellement partie du combiné central CC. Par ailleurs, la liste peut être proposée au moyen d'un message sonore diffusé par les haut-parleurs du véhicule V et/ou d'un message textuel affiché sur un écran du véhicule V ou de l'équipement de communication mobile. Dans la première alternative l'écran peut être celui qui est référencé EA sur la figure 1 et qui fait éventuellement partie du combiné central CC.

On notera que les moyens de synthèse vocale (non représentés) peuvent faire partie du dispositif d'assistance DA. Mais cela n'est pas obligatoire. En effet, ils pourraient faire partie d'un équipement électronique du véhicule V couplé au dispositif d'assistance DA, comme par exemple le combiné central CC, ou bien d'un équipement de communication mobile (lorsque ce dernier comprend le dispositif d'assistance DA).

Les moyens de contrôle MC sont également propres à faire fonctionner l'agent conversationnel qui a été sélectionné par l'usager automatiquement ou lorsqu'au moins un mot ou une expression prononcé(e) par ce dernier a été reconnu(e) par les moyens de reconnaissance vocale MR. Le mot « automatiquement » signifie ici que les moyens de contrôle MC peuvent décider de faire fonctionner l'agent conversationnel lorsqu'ils déterminent qu'un ensemble de conditions est rempli, sans que l'usager ait prononcé un mot ou une expression, par exemple en fonction du contexte et/ou de cet agent conversationnel.

Ce fonctionnement peut servir, par exemple, à répondre à une question de l'usager, ou à exécuter une commande de tâche fournie verbalement par l'usager, ou à inciter l'usager à demander la réalisation d'une tâche, éventuellement de façon préventive, ou à proposer à l'usager de demander la réalisation d'une tâche, éventuellement de façon préventive, ou à inciter l'usager à déclencher la réalisation d'une tâche, éventuellement de façon préventive, ou à déclencher automatiquement la réalisation d'une tâche, ou encore à instaurer un dialogue dans un but de « socialisation ».

Grâce à l'invention, chaque usager du véhicule V peut désormais choisir (ou sélectionner) l'agent conversationnel qui correspond le mieux à ses besoins (ou attentes), sans avoir besoin (a priori) de le configurer. Ainsi, lorsque la voix d'un usager est reconnue par les moyens de reconnaissance vocale MR, les moyens de contrôle MC en sont immédiatement avertis par ces derniers (MR) et donc font immédiatement fonctionner l'agent conversationnel qui a été préalablement choisi (ou sélectionné) par cet usager. De même, lorsque l'usager du véhicule V a préalablement choisi un agent conversationnel et signalé que seul celui-ci devait être utilisé, alors les moyens de contrôle MC ne font fonctionner que cet agent conversationnel.

Par exemple, les moyens de contrôle MC peuvent être propres à (ou agencés pour) proposer à l'usager reconnu une liste d'au moins deux agents conversationnels ayant des types qui sont choisis parmi au moins un type dit entraîneur (ou « coach »), un type dit bienfaiteur, un type dit majordome, et un type dit ami.

On entend ici par « agent conversationnel de type entraîneur » un agent conversationnel destiné majoritairement à proposer, ou inciter à faire, des actions (ou tâches), de façon régulière.

On entend ici par « agent conversationnel de type bienfaiteur » un agent conversationnel destiné majoritairement à prendre des décisions à la place de l'usager, et donc conversant relativement peu fréquemment avec l'usager, hormis pour lui signaler qu'il vient de déclencher une tâche.

On entend ici par « agent conversationnel de type majordome » un agent conversationnel destiné majoritairement à exécuter des actions (ou tâches) requises par l'usager, et donc conversant relativement peu fréquemment avec l'usager, hormis pour lui signaler qu'il vient de déclencher une tâche qu'il a requise.

On entend ici par « agent conversationnel de type ami » un agent conversationnel destiné majoritairement à dialoguer fréquemment avec l'usager, éventuellement de sujets sans rapport avec l'automobile, dans un but de socialisation.

On notera que lorsque l'agent conversationnel mis en fonctionnement (ou utilisé) doit déclencher une tâche d'un équipement du véhicule V, les moyens de contrôle MC vont transmettre une ou plusieurs commandes correspondantes à cet équipement, par voie d'ondes et/ou par voie filaire (par exemple via le réseau de communication multiplexé du véhicule V).

A titre d'exemple, les critères préconfigurés de chaque ensemble prédéfini associé à un agent conversationnel peuvent être choisis parmi, au moins, un critère de contexte relatif au nombre d'usagers présents dans le véhicule V, un critère de contexte relatif à l'environnement du véhicule V, un critère d'apprentissage, un critère de niveau d'intelligence, un critère de mode d'initiation d'une conversation, un critère de type de message à fournir, un critère de temporalité d'un message à fournir, un critère de représentation d'un message à fournir, un critère d'évolution de relation, un critère de type d'incarnation, un critère de partage d'autorité, et un critère de registre de langue.

Par exemple, un critère de contexte relatif au nombre d'usagers présents dans le véhicule V peut servir à moduler le comportement d'un agent conversationnel selon qu'il y a un seul usager ou bien plusieurs dans le véhicule V.

Egalement par exemple, un critère de contexte relatif à l'environnement du véhicule V peut servir à moduler le comportement d'un agent conversationnel selon le type de route sur laquelle circule le véhicule V (route, voie rapide, autoroute) et/ou selon le lieu (ville, campagne, montagne).

Egalement par exemple, un critère d'apprentissage peut servir à moduler le niveau d'évolution comportementale d'un agent conversationnel vis-à-vis d'un usager en fonction du comportement de ce dernier.

Egalement par exemple, un critère de niveau d'intelligence peut servir à moduler le niveau d'intelligence artificielle d'un agent conversationnel, par exemple pour qu'il agisse de façon automatisée, ou en tant que simple assistant, ou encore de façon autonome.

Egalement par exemple, un critère de mode d'initiation d'une conversation (ou modalité) peut servir à définir chaque modalité d'interaction d'un agent conversationnel avec un usager (par exemple haptique, sonore ou visuelle).

Egalement par exemple, un critère de type de message à fournir peut servir à définir chaque type de message qu'un agent conversationnel peut adresser à un usager (par exemple information (renseignement, alerte, retour d'information), demande (proposition, ordre, requête, interrogation), prévision, salutation (discussion / socialisation)).

Egalement par exemple, un critère de temporalité d'un message à fournir peut servir à définir la fréquence suivant laquelle un agent conversationnel peut adresser un message à un usager (par exemple unique, occasionnelle, ou régulière), et/ou la durée avant de fournir un message à l'usager (par exemple courte, longue ou dans l'attente d'un retour de l'usager).

Egalement par exemple, un critère de représentation d'un message à fournir peut servir à définir la/chaque forme que va prendre un message fourni par un agent conversationnel à l'usager ou au véhicule V (un même message peut être exprimé par le biais de plusieurs représentations différentes mais ayant un même sens).

Egalement par exemple, un critère d'évolution de relation peut servir à définir la façon dont la relation entre un agent conversationnel et un usager peut évoluer dans le temps pour permettre une personnalisation du dialogue et une amélioration de l'expérience de l'usager.

Egalement par exemple, un critère de type d'incarnation peut servir à définir le niveau d'abstraction de la conversation entre un agent conversationnel et un usager (par exemple entre abstrait et réaliste) et/ou le niveau de détail d'un message fourni par un agent conversationnel à un usager (par exemple entre minimaliste et détaillé).

Egalement par exemple, un critère de partage d'autorité peut servir à moduler le mode d'intervention d'un agent conversationnel vis-à-vis d'un usager (par exemple pour informer, coopérer, superviser ou agir automatiquement).

Egalement par exemple, un critère de registre de langue peut servir à définir le type de langage pouvant être utilisé par un agent conversationnel pour un usager (par exemple familier, courant (ou standard), ou soutenu (ou courtois)).

On notera que les moyens de contrôle MC peuvent être également propres à proposer à un usager un mode dit expert dans lequel il est autorisé à modifier la pré-configuration de l'un au moins des critères préconfigurés de l'ensemble prédéfini qui est associé à l'agent conversationnel qu'il a sélectionné.

Dans ce cas, les moyens de contrôle MC peuvent, par exemple, être propres, en cas de sélection par un usager de ce mode expert, à déclencher l'affichage sur un écran d'affichage des critères préconfigurés modifiables de l'ensemble prédéfini qui est associé à l'agent conversationnel sélectionné par cet usager. Cet écran d'affichage peut faire partie du véhicule V ou de l'équipement de communication mobile. Dans la première alternative l'écran peut être celui qui est référencé EA sur la figure 1 et qui fait éventuellement partie du combiné central CC.

De préférence, seuls sont affichés les critères préconfigurés qui sont modifiables. C'est notamment le cas dans les deux exemples illustrés non limitativement sur les figures 2 et 3.

Plus précisément, sur la figure 2 se trouve schématiquement illustré un premier exemple d'image I1 définie par un dispositif d'assistance DA, représentative des critères préconfigurés modifiables de l'ensemble prédéfini qui peut être associé à un agent conversationnel de type entraîneur, et destinée à être affichée sur un écran d'affichage (par exemple EA).

Sur la figure 3 se trouve schématiquement illustré un second exemple d'image I2 définie par un dispositif d'assistance DA, représentative des critères préconfigurés modifiables de l'ensemble prédéfini qui peut être associé à un agent conversationnel de type bienfaiteur, et destinée à être affichée sur un écran d'affichage (par exemple EA).

Dans ces deux exemples, les points noirs matérialisent toutes les options ou définitions des critères modifiables qui sont choisies dans le cadre de la pré-configuration initiale et qui peuvent être désélectionnées ou modifiées par un usager.

On notera que les moyens de contrôle MC peuvent être également propres à adapter (ou affiner) le fonctionnement d'un agent conversationnel en fonction du comportement de l'usager qui a sélectionné ce dernier. Cela peut permettre, par exemple, de modifier le critère de partage d'autorité de cet agent conversationnel, pour l'usager considéré, lorsque ce dernier refuse souvent, ou accepte systématiquement, les propositions qui lui sont faites.

Tout type d'algorithme connu de l'homme de l'art et permettant d'adapter (ou d'affiner) le fonctionnement d'un agent conversationnel peut être ici utilisé par les moyens de contrôle MC.

## Revendications

1. Dispositif d'assistance (DA) pour assister au moins un usager d'un véhicule (V) comprenant des équipements propres à réaliser des tâches comprenant i) des moyens de reconnaissance vocale (MR) propres à reconnaître des mots et expressions prononcés par au moins ledit usager, et ii) des moyens de contrôle (MC) propres, d'une part, à proposer audit usager une liste d'agents conversationnels afin qu'il sélectionne l'un d'entre eux, chaque agent conversationnel étant propre à converser, via des moyens de synthèse vocale, avec ledit usager, au moins pour proposer la réalisation de tâche(s), et/ou à déclencher automatiquement la réalisation de tâche(s), en fonction d'un ensemble prédéfini associé de critères préconfigurés définissant chacun au moins un mode ou droit d'intervention, et, d'autre part, à faire fonctionner l'agent conversationnel sélectionné par ledit usager automatiquement ou lorsqu'au moins un mot ou une expression prononcé(e) par ce dernier a été reconnu(e) par lesdits moyens de reconnaissance vocale (MR).

2. Dispositif selon la revendication 1, dans lequel esdits critères préconfigurés de chaque ensemble prédéfini sont choisis parmi un critère de contexte relatif au nombre d'usagers présents dans ledit véhicule (V), un critère de contexte relatif à l'environnement dudit véhicule (V), un critère d'apprentissage, un critère de niveau d'intelligence, un critère de mode d'initiation d'une conversation, un critère de type de message à fournir, un critère de temporalité d'un message à fournir, un critère de représentation d'un message à fournir, un critère d'évolution de relation, un critère de type d'incarnation, un critère de partage d'autorité, et un critère de registre de langue.

3. Dispositif selon l'une des revendications 1 et 2, dans lequel lesdits moyens de contrôle (MC) sont propres à proposer audit usager un mode dit expert dans lequel il est autorisé à modifier la pré-configuration de l'un au moins des critères préconfigurés de l'ensemble prédéfini associé audit agent conversationnel qu'il a sélectionné.

4. Dispositif selon la revendication 3, dans lequel lesdits moyens de contrôle (MC) sont propres, en cas de sélection par ledit usager dudit mode expert, à déclencher un affichage sur un écran d'affichage (EA) des critères préconfigurés modifiables dudit ensemble prédéfini associé audit agent conversationnel qu'il a sélectionné.

5. Dispositif selon l'une des revendications 1 à 4, dans lequel lesdits moyens de contrôle (MC) sont propres à adapter le fonctionnement d'un agent conversationnel en fonction d'un comportement dudit usager qui a sélectionné ce dernier.

6. Equipement électronique (CC) pour un véhicule (V) comprenant un dispositif d'assistance (DA) selon l'une des revendications précédentes.

7. Véhicule (V) comportant des équipements propres à réaliser des tâches, comprenant en outre un dispositif d'assistance (DA) selon l'une des revendications 1 à 5 ou un équipement électronique (CC) selon la revendication 6.

8. Véhicule selon la revendication 7, ledit véhicule étant de type automobile.

9. Equipement de communication mobile propre à communiquer par voie d'ondes avec des moyens de communication embarqués dans un véhicule (V) comportant également des équipements propres à réaliser des tâches et comprenant un dispositif d'assistance (DA) selon l'une des revendications 1 à 5.

## Patentansprüche

1. Unterstützungsvorrichtung (DA), um einen Benutzer eines Fahrzeugs (V) mindestens zu unterstützen, das Ausstattungen umfasst, die eigen sind, Aufgaben zu verwirklichen, die Mittel der Spracherkennung (Herr) die eigen sind durch mindestens anzuerkennen besagten Benutzer und ii ausgesprochene Wörter und Ausdrücke) der Kontrollmittel (MC) umfassen, die sauber sind einerseits, des Benutzers eine Liste von Gesprächsbeamten vorzuschlagen, damit er einen unter ihnen jeder Gesprächsbeamte, der geeignet ist zu plaudern via Mitteln von Stimmsynthese auswählt, mit besagtem Benutzer mindestens, um die Aufgabenverwirklichung (s) vorzuschlagen, und/oder die Aufgabenverwirklichung (s) gemäß einer Gesamtheit automatisch auszulösen vorher bestimmter Geschäftspartner preconfigures Kriterien, die jedes mindestens eine Methode oder Interventionsrecht definieren, und andererseits den von besagtem Benutzer ausgewählten Gesprächsbeamten automatisch funktionieren zu lassen oder wenn mindestens ein Wort oder ein Ausdruck ausgesprochen (e), durch letzteren (e) von besagten Spracherkennungmitteln (Herr) anerkannt worden ist.

2. Vorrichtung nach Forderung ein 1, in der besagte preconfigures Kriterien jeder vorher bestimmten Gesamtheit unter einem Zusammenhangskriterium betreffend die Anzahl der anwesenden Benutzer in besagtem Fahrzeug (V), einem Zusammenhangskriterium betreffend die Umwelt des Fahrzeugs (V), einem Lehrkriterium, einem Kriterium des Intelligenzniveaus, einem Kriterium der Methode der Einführung einer Unterhaltung, einem Kriterium zu liefernder Art von Mitteilung, einem Kriterium der Zeitlichkeit einer zu liefernden Mitteilung gewählt werden, Kriterium der Darstellung einer zu liefernden Mitteilung, ein Kriterium der Beziehungsentwicklung, ein Kriterium der Art von Inkarnation, ein Autoritätsteilungskriterium und ein Kriterium von Sprachregister.

3. Vorrichtung nach einer Forderung 1 und 2, in der besagte Kontrollmittel (MC), geeignet sind, des Benutzers eine sachkundige so genannte Methode vorzuschlagen, in der er die Vor-Konfiguration von mindestens preconfigures der Kriterien der vorher bestimmten Gesamtheit ändern darf, die des Gesprächsbeamten verbunden ist, den er ausgewählt hat.

4. Vorrichtung nach Forderung 3, in der besagte KontrolleenWerkzeuge (MASSE), geeignet sind bei Auswahl durch besagten Benutzer der sachkundigen Methode, eine Anzeige auf einem Bildschirm der Anzeige (EA) der abänderungsfähigen Kriterien preconfigures zu auslösen, des vorher bestimmten Zusammenbaus, der des Gesprächsbeamten verbunden ist, den er gewählt hat.

5. Vorrichtung nach einer Forderung 1 bis 4, in der besagte KontrolleenWerkzeuge (MASSE), geeignet sind, die Operation eines Gesprächsbeamten gemäß einem Verhalten des Benutzers anzupassen, der letzteren gewählt hat.

6. Elektronische Ausstattung (CC) für ein Fahrzeug (V), die eine (DA)-Unterstützungsvorrichtung nach einer der vorhergehenden Forderungen umfasst.

7. Fahrzeug (V), das Equipmente umfasst, die eigen sind, Aufgaben zu verwirklichen, die außerdem eine (DA)-Unterstützungsvorrichtung nach einer Forderung 1 bis 5 oder ein elektronisches Equipment (CC) nach Forderung 6 umfassen.

8. Fahrzeug nach Forderung 7 besagtes Fahrzeug seiend von Autotyp.

9. Bewegliche Kommunikationsausstattung, die eigen ist, mittels der Wellen mit KommunikationsWerkzeugen mitzuteilen, die in einem Fahrzeug (V) eingeschifft wurden das ebenfalls Equipmente umfasst, die eigen sind, Aufgaben zu verwirklichen und das eine (DA)-Unterstützungsvorrichtung nach einer Forderung 1 bis 5 umfasst.

## Claims

1. Device of (DA) assistance to assist at least a user of a vehicle (V) including equipment suitable to carry out tasks, including means of speech recognition (MR.) suitable to recognise words and expressions pronounced by at least the aforementioned user, and II) of the methods of control (MC) clean, on the one hand, to propose to the user a list conversational agents so that it selects one of them, each conversational agent being specific to converse, via means of voice synthesis, with the aforementioned user, at least to propose the realisation of task (S), and/or to start automatically the realisation of task (S), according to one together preset associated preconfigures criteria defining each one at least a mode or right of intervention, and, in addition, to make automatically function the conversational agent selected by the aforementioned user or when at least a word or an expression marked (E) by this last was recognised (E) by the aforementioned means of speech recognition (MR.).

2. Device according to claim 1, in which the aforementioned preconfigures criteria of each preset unit are selected among a criterion of context relating to the number of users present in the aforementioned vehicle (V), a criterion of context relating to of the aforesaid environment conveys (V), a criterion of training, a criterion of level of intelligence, a criterion of mode of initiation of a conversation, a criterion of the type of message required, a criterion of temporality of a message required, a criterion of representation of a message required, a criterion of evolution of relation, a criterion of the type of incarnation, a criterion of division of authority, and a criterion of register of language.

3. Device according to one of the claims 1 and 2, in which the aforementioned methods of control (MC) are specific to propose to the user a mode says expert in which it is authorised to modify the pre-configuration of at least criteria preconfigures of the preset unit associated to that the conversational agent that it selected.

4. Device according to claim 3, in which the aforementioned methods of control (MC) are clean, in the event of selection by the aforementioned user of the aforesaid expert mode, to start a posting on a screen of posting (EA) of the modifiable preconfigures criteria of the aforesaid preset unit associated to that the conversational agent which it selected.

5. Device according to one of the claims 1 to 4, in which the aforementioned methods of control (MC) are specific to adapt the operation of a conversational agent according to a behaviour of the aforesaid user who selected this last.

6. Electronic equipment (DC) for a vehicle (V), including a device of (DA) assistance according to one of the preceding claims.

7. Vehicle (V) comprising equipment suitable to carry out tasks, including moreover a device of (DA) assistance according to one of claims 1 to 5 or one electronic equipment (DC) according to claim 6.

8. Vehicle according to claim 7, the aforementioned vehicle being of automobile type.

9. Equipment of mobile communication suitable to communicate by way of waves with means of communication embarked in a vehicle (V) also comprising equipment suitable to carry out tasks, and including a device of (DA) assistance according to one of claims 1 to 5.
